# EUROPÄISCHE PATENTANMELDUNG

(11) **EP 3 912 688 A1**
(43) Veröffentlichungstag der Anmeldung: **24.11.2021**
(21) Anmeldenummer: 20020234.9
(22) Anmeldetag: 19.05.2020
(51) Int. Cl.: A62C 2/00, A62C 99/00, B01J 19/00, B01J 19/14

(54) **SICHERE INERTISIERUNGSVORRICHTUNG**

(71) Anmelder: L'AIR LIQUIDE, SOCIÉTÉ ANONYME POUR L'ÉTUDE ET L'EXPLOITATION DES PROCÉDÉS GEORGES CLAUDE, 75007 Paris (FR)
(72) Erfinder: Tadiello, Jean-Philippe, 60439 Frankfurt (DE)
(74) Vertreter: Dropsch, Holger

(57) **Zusammenfassung**

Die Erfindung betrifft eine betrifft eine Inertisierungsvorrichtung zum Inertisieren eines Arbeitsvolumens in einer chemischen Produktionsanlage durch Spülen mit Inertgas, wobei die chemische Produktionsanlage ein anlagenweites Inertgasverteilungssystem mit Rohrleitungen für die Verteilung des Inertgases und mindestens eine mit einer Verbindungsleitung verbindbare Inertgas-Abnahmestelle umfasst. Erfindungsgemäß ist vorgesehen, dass die Verbindungsleitung zwischen Inertisierungsvorrichtung und Arbeitsvolumen an ihrem zu dem Arbeitsvolumen weisenden Ende in nicht reversibel lösbarer Weise mit einem Zwischenstück verbunden ist, wobei das Zwischenstück mit einem an dem Arbeitsvolumen vorgesehenen Gegenstück in reversibel lösbarer Weise verbindbar ist.

## Beschreibung

### Gebiet der Erfindung

Die Erfindung betrifft eine sichere Inertisierungsvorrichtung zum Inertisieren eines Arbeitsvolumens in einer chemischen Produktionsanlage durch Spülen mit Inertgas, wobei die chemische Produktionsanlage ein anlagenweites Inertgasverteilungssystem mit Rohrleitungen für die Verteilung des Inertgases und mindestens eine mit einer Verbindungsleitung verbindbare Inertgas-Abnahmestelle umfasst, an die die Inertisierungsvorrichtung anschließbar ist. Die Erfindung betrifft ferner besondere Verwendungen der Inertisierungsvorrichtung.

### Stand der Technik

Als Inertisierung eines Arbeitsvolumens in der chemischen Industrie wird das Hinzufügen von Inertstoffen bezeichnet, die häufig als Gas (z. B. Stickstoff, Kohlendioxid, Edelgase, Wasserdampf) erfolgt. Beispiele für bedeutende Arbeitsvolumina, die in der chemischen Technik auftreten können und häufig der Inertisierung bedürfen, sind Behälter, Tanks, Reaktoren, Rohrleitungen, Verdichterstufen, Pumpen, Trennkolonnen zur Durchführung thermischer Trennverfahren wie Absorptionskolonnen oder Destillationskolonnen.

Ziel ist es dabei, sicherheitstechnische Kenngrößen eines in dem Arbeitsvolumen vorhandenen Stoffes oder Stoffgemisches zu verändern, um beispielsweise eine explosionsfähige Atmosphäre in dem Arbeitsvolumen oder eine unerwünschte Veränderung der Eigenschaften der vorhandenen Stoffe oder Stoffgemische oder des Arbeitsvolumens selbst (z. B. durch Korrosion) zu verhindern. Dazu wird beispielsweise die Konzentration eines nachteilig oder gefährlich wirkenden Gases, oft von Sauerstoff, unter eine Grenzkonzentration gebracht, unterhalb derer die schädliche oder gefährliche Wirkung nicht mehr auftritt. Dies kann beispielsweise durch Binden des Sauerstoffs an ein für diesen selektives Sorbens erfolgen, gebräuchlicher ist aber das teilweise oder vollständige Verdrängen des Sauerstoffs durch Beaufschlagen des Arbeitsvolumens mit einem bezüglich der unerwünschten chemischen Reaktion unreaktiven Gas (Inertgas). Die Beaufschlagung kann dabei kontinuierlich oder intermittierend in Abhängigkeit von einem Sauerstoff-Messwert im Arbeitsvolumen erfolgen. Möglich ist auch eine fallweise Beaufschlagung mit Inertgas bei besonderen Betriebszuständen oder Betriebsänderungen einer chemischen Produktionsanlage oder bei Anlagenstillständen während Wartungs- oder Reparaturarbeiten, bei denen Anlagenteile zuvor der Umgebungsluft ausgesetzt waren, um das Betreten dieses Bereichs durch das Reparaturpersonal zu ermöglichen. Eine entsprechende Inertisierungsvorrichtung mit Sicherheitseinrichtung beschreibt die europäische Patentanmeldung EP 1 913 980 A1.

Beim Überlagern mit Inertgas wird der Gasraum über dem gelagerten Produkt in Tanks oder in Reaktoren mit einem inerten Gas gefüllt, um den Inhalt vor dem Explodieren zu schützen, sauerstoffbedingte Abbauprozesse oder Polymerisationsreaktionen zu unterbinden oder Einrichtungen vor Korrosion zu schützen. Üblicherweise wird ein Überlagerungssystem so ausgelegt, dass es unter höheren Drücken als dem atmosphärischen Druck arbeiten kann und damit das Eindringen von Umgebungsluft in Behälter verhindert.

Aus wirtschaftlichen Gründen und aufgrund seiner Verfügbarkeit ist Stickstoff das am häufigsten verwendete Inertgas. Viele Produktionsanlagen der chemischen, insbesondere der petrochemischen Industrie oder Raffinerien sind mit einem anlagenweiten oder standortweiten Inertgasverteilungssystem ausgerüstet, das Rohrleitungen für die Verteilung des Inertgases und Inertgas-Abnahmestellen umfasst, die mittels einer Verbindungsleitung mit dem zu inertisierenden Arbeitsvolumen verbunden werden können. Diese Verbindungsleitungen sind zumeist flexibel ausgestaltet, um eine einfache Verbindung zwischen dem Arbeitsvolumen und dem Inertgasverteilungssystem herstellen zu können, und sind mit dem Inertgasverteilungssystem über einen Druckminderer oder ein einfaches Abnahmeventil verbunden, mit dessen Hilfe der Inertgas-Volumenstrom eingestellt werden kann. Ferner kann ein Rückschlagventil umfasst sein, um einen Rückstrom von Fremdgas in das Inertgasverteilungssystem zu unterbinden, der ansonsten zu Kontaminationen führen würde.

Verbreitet ist beispielsweise die Verwendung von Polymerschläuchen, z. B. Gummischläuchen, als Verbindungsleitung. Nachteilig ist es dabei aber, dass die Druckbelastbarkeit solcher Schläuche stark begrenzt ist, beispielsweise auf maximal 10 bar. Daher können diese Schläuche bei Fehlbedienung relativ rasch bersten, wodurch brennbare oder toxische Prozessmedien aus dem zu inertisierenden Arbeitsvolumen freigesetzt werden können.

Dank der zunehmenden Automatisierung von Produktionsanlagen der chemischen Industrie gibt es immer weniger Bedienungspersonal. Die Betriebszeit zwischen Betriebsumstellungen (sog. Turnarounds) oder der Wartung von Maschinen oder anderen Ausrüstungsteilen wird immer länger. Die Folge davon ist, dass das verbleibende, zahlenmäßig eingeschränkte Personal mehr Arbeit während der Betriebsumstellung oder der Maschinenwartung zu erledigen hat und gleichzeitig weniger Erfahrung besitzt, da solche besonderen Anlagenzustände weniger häufig auftreten. Dies kann zu Fehlbedienungen während der Inertisierung führen und gefährliche Situationen hervorrufen. Dies wird dadurch verstärkt, dass die Inertisierung von Arbeitsvolumina beispielsweise durch Spülen mit Stickstoff als Inertgas oft mit Leitungen vorgenommen wird, die nicht mit einem Absperr- oder Rückschlagventil ausgestattet sind, wodurch es zu Fehlbedienungen sowie unerwünschte Behälter-Überfüllung oder Rückströmen von Kontaminationen in das Inertgasverteilungssystem kommen kann.

Die zur Inertisierung verwendete Verbindungsleitung muss vor der (Wieder-)Inbetriebnahme einer Produktionsanlage von dem inertisierten Arbeitsvolumen getrennt werden. Es kommt vor, dass dies aus dem oben erläuterten Grund vergessen wird. Wenn somit die Verbindungsleitung, beispielsweise ein Polymerschlauch, an das in der Produktionsanlage befindliche Arbeitsvolumen angeschlossen bleibt, könnte es bei der Wiederinbetriebnahme zu einer Überschreitung des Auslegungsdruckes der Leitung und somit zu einem Bersten der Leitung kommen, wodurch u. U. gefährliche Betriebsmedien in die Umgebung freigesetzt werden können. Dieses Problem wird noch dadurch verstärkt, dass die in die Leitung einströmenden Prozessgase oft hohe Temperaturen aufweisen, wohingegen der Gebrauch flexibler Polymerschläuche nur für Gase zulässig ist, die Umgebungstemperatur aufweisen.

Falls der Druck im Arbeitsvolumen dagegen nicht hoch genug ist, um dessen Bersten zu bewirken, könnte es aber durch Rückströmung zur Kontamination des Inertgasinventars in dem Inertgasverteilungssystem kommen, was ebenfalls unerwünscht ist.

### Beschreibung der Erfindung

Die Aufgabe der vorliegenden Erfindung besteht daher darin, eine Inertisierungsvorrichtung zum Inertisieren eines Arbeitsvolumens in einer chemischen Produktionsanlage durch Spülen mit Inertgas anzugeben, die die erwähnten Nachteile des Stands der Technik nicht aufweist.

Diese Aufgabe wird in einem ersten Aspekt durch eine Inertisierungsvorrichtung mit den Merkmalen des Anspruchs 1 gelöst. Weitere Ausgestaltungen der Erfindung ergeben sich aus den Unteransprüchen. Die Erfindung betrifft ferner besondere Verwendungen einer solchen Inertisierungsvorrichtung.

Unter einem Arbeitsvolumen, insbesondere einem Arbeitsvolumen in einer chemischen Produktionsanlage, wird ein durch Wände abgegrenzter oder abgrenzbarer, ein Volumen aufweisender, bezüglich eintretender aus austretender Stoffströme verschließbarer Raum verstanden, der beispielsweise der Durchführung chemischer Reaktionen, thermischer Trennoperationen, Transport oder Lagerung von Stoffen dient. Beispiele für solche Arbeitsvolumen in einer chemischen Produktionsanlage sind Behälter, Tanks, Reaktoren, Rohrleitungen, Verdichter, einzelne Verdichterstufen, Pumpen, Destillationskolonnen, Absorptionskolonnen.

Unter Fluidverbindung zwischen zwei Bereichen der erfindungsgemäßen Vorrichtung wird dabei jegliche Art von Verbindung verstanden, die es ermöglicht, dass ein Fluid, beispielsweise ein Gasstrom, von dem einen zu dem anderen der beiden Bereiche strömen kann, unbeachtlich etwaiger zwischengeschalteter Bereiche oder Bauteile. Insbesondere wird unter einer direkten Fluidverbindung jegliche Art von Verbindung verstanden, die es ermöglicht, dass ein Fluid, beispielsweise ein Gasstrom, von direkt dem einen zu dem anderen der beiden Bereiche strömen kann, wobei keine weiteren Bereiche oder Bauteile zwischengeschaltet sind. Ein Beispiel wäre eine Rohrleitung oder Schlauchleitung, die direkt dem einen zu dem anderen der beiden Bereiche führt.

Unter einem Mittel wird eine Sache verstanden, die die Erreichung eines Zieles ermöglicht oder dabei behilflich ist. Insbesondere werden unter Mitteln zum Durchführen eines bestimmten Verfahrensschrittes alle diejenigen physischen Gegenstände verstanden, die der Fachmann in Betracht ziehen würde, um diesen Verfahrensschritt durchführen zu können. Beispielsweise wird der Fachmann als Mittel zum Einleiten oder Ausleiten eines Stoffstroms alle Transport- und Fördervorrichtungen, also z. B. Rohrleitungen, Pumpen, Verdichter, Ventile, in Betracht ziehen, die ihm aufgrund seines Fachwissens zur Durchführung dieses Verfahrensschrittes notwendig oder sinnvoll erscheinen.

Unter einer Verbindungsvorrichtung wird ein zweiteiliger physischer Artikel verstanden, bestehend aus einem Stück und einem mit diesem verbindbaren Gegenstück und dem Zweck dienend, eine direkte Fluidverbindung zwischen zwei Bereichen zu schaffen. Wenn die Verbindungsvorrichtung so beschaffen ist, dass ein Ausstrom von Gasen aus der Verbindungsvorrichtung in die Umgebung bzw. ein Einstrom von Gasen aus der Umgebung in die Verbindungsvorrichtung verhindert wird, wird von einer gasdichten Verbindung gesprochen. Die Umgebung kann beispielsweise die umgebende Atmosphäre sein.

Unter der Aussage, dass zwei Körper, beispielsweise die Bestandteile einer Verbindungsvorrichtung, in reversibel lösbarer Weise verbindbar sind, wird verstanden, dass diese auf rein mechanische Weise und zerstörungsfrei, also ohne Überwindung chemischer Bindungskräfte getrennt und auf rein mechanische Weise wieder verbunden werden können. Daher sind unter diese Art der Verbindung insbesondere formschlüssige und kraftschlüssige Fügeverfahren zu verstehen. Formschlüssige Verbindungen werden durch die Formgebung der zu verbindenden Körper verbunden. Kraftschlüssige Verbindungen werden durch Reibungskräfte zusammengehalten. Als Beispiele für reversibel lösbare Verbindungen seien Stecken, Verschrauben, Klemmen und Nietverbindungen genannt, da zwar die Niete zum Trennen zerstört werden müssen, aber nicht die gefügten Bauteile.

Im Gegensatz hierzu wird unter der Aussage, dass zwei Körper, beispielsweise die Bestandteile einer Verbindungsvorrichtung, in nicht reversibel lösbarer Weise verbindbar sind, verstanden, dass beim Lösen der Verbindung chemischer Bindungskräfte überwunden werden müssen, wobei eine gewisse Zerstörung zumindest des Verbindungsmaterials auftritt. Man spricht hierbei auch von stoffschlüssigen Verbindungen, die eine Verbindung im Werkstoff selbst herstellen. Dazu zählen Schweiß- und Lötverbindungen sowie Klebeverbindungen. Kennzeichnend ist es dabei, dass beim erneuten Herstellen einer Verbindung zwischen den zuvor getrennten Körpern erneut ein Hilfsstoff aufgebracht werden muss, beispielsweise Schweißmittel, Lot oder Klebstoff.

Unter der Angabe, dass zwei Körper, beispielsweise die Bestandteile einer Verbindungsvorrichtung, in mechanisch komplementärer Weise ineinandergreifen, wird verstanden, dass die beiden Körper bezüglich ihrer Formgebung so ausgestaltet sind, dass sie durch Ineinanderstecken und entgegengesetztes Drehen verbunden und auch wieder getrennt werden können. Beispiele sind Schlüssel und Schloss oder ein Bajonettverschluss.

Eine Rückschlagarmatur ist ein mechanisches Bauteil, welches die Strömung eines Fluids, also einer Flüssigkeit oder einem Gas, in nur einer Richtung zulässt. Bei federbelasteten Rückschlagarmaturen wird das Schließelement in einer Richtung durch die Feder geschlossen, in der anderen Richtung dagegen vom Druck des strömenden Fluids freigegeben. Hierbei wird entweder eine Kugel, ein Kegel, eine Klappe oder eine Membran in den jeweiligen Dichtungssitz gedrückt. Steht in der Durchlassrichtung ein Druck an, der die Rückstellkraft der Feder überwinden kann, wird das dichtende Element vom Sitz abgehoben und der Durchfluss ist frei. Bei Rückschlagarmaturen ohne Feder wird das Dichtelement entweder durch die Schwerkraft oder den Fließdruck des strömenden Fluids in den Dichtungssitz gedrückt.

Unter einer Abgasentsorgungsvorrichtung wird eine Vorrichtung verstanden, die nach einem Prinzip der Abgasnachbehandlung oder Abgasreinigung arbeitet. Die Abgasentsorgungsvorrichtung umfasst auch Mittel zum Abführen der Abgase von ihrem Entstehungsort und Zuführen zu der Abgasnachbehandlung oder Abgasreinigung, beispielsweise Rohrleitungen. Für brennbare Abgase ist oft das Verbrennen, beispielsweise in einem Fackelsystem, eine geeignete Entsorgungsmethode. Für weniger bedenkliche Abgasarten kann auch die Abgabe an die Umgebung, beispielsweise über einen Kamin, eine geeignete Entsorgungsmethode sein, wenn dabei die gesetzlichen Emissionsgrenzwerte eingehalten werden.

Der vorliegenden Erfindung liegt das Konzept zugrunde, dass die zweite Verbindungsleitung, also die Verbindungsleitung zwischen der Inertisierungsvorrichtung und dem zu inertisierenden Arbeitsvolumen, an ihrem zu dem Arbeitsvolumen weisenden Ende mit einem Zwischenstück verbunden ist, bevorzugt in nicht reversibel lösbarer Weise mit einem Zwischenstück verbunden ist, wobei das Zwischenstück mit einem an dem Arbeitsvolumen vorgesehenen Gegenstück in reversibel lösbarer Weise verbindbar ist. Durch die bevorzugt nicht reversibel lösbare Verbindung zwischen Verbindungsleitung und Zwischenstück wird erreicht, dass das Zwischenstück nicht in einfacher Weise vor der Verbindungsleitung demontiert werden kann und die Verbindungsleitung für nicht bestimmungsgemäße Zwecke eingesetzt werden kann. Die Verbindung zwischen dem Arbeitsvolumen und dem Zwischenstück wird dagegen reversibel lösbar ausgestaltet, so dass in einfacher Weise, ggf. sogar ohne Verwendung besonderer Werkzeuge, eine Verbindung zwischen Arbeitsvolumen und Zwischenstück hergestellt und nach erfolgtem Inertisieren wieder gelöst werden kann. Vorteilhaft ist es dabei, wenn Zwischenstück und Gegenstück in mechanisch komplementärer Weise ineinandergreifen und somit im verbundenen Zustand eine Verbindungsvorrichtung bilden. Weiterhin ist es vorteilhaft, wenn Zwischenstück und Gegenstück in mechanisch komplementärer Weise ineinandergreifen und somit im verbundenen Zustand eine Verbindungsvorrichtung bilden, wobei erst die Bildung der Verbindungsvorrichtung den Einstrom von Inertgas in das Arbeitsvolumen ermöglicht. Anders ausgedrückt, ist in dieser Ausgestaltung bei getrenntem Zwischenstück und Gegenstück kein Fließen von Inertgas möglich.

Weiterhin ist es vorteilhaft, wenn das Zwischenstück und/oder die Verbindungsleitung zwischen der Inertisierungsvorrichtung und dem zu inertisierenden Arbeitsvolumen eine Rückflusssperrvorrichtung umfasst. Auf diese Weise wird verhindert, dass Betriebsmedien in die Inertisierungsvorrichtung einströmen können, falls unbeabsichtigter Weise bei der Inbetriebnahme des Arbeitsvolumens dieses noch mit der Inertisierungsvorrichtung verbunden ist, weil beispielsweise ihre Abtrennung vergessen wurde.

### Bevorzugte Ausgestaltungen der Erfindung

Ein zweiter Aspekt der erfindungsgemäßen Vorrichtung ist dadurch gekennzeichnet, dass die vierte Verbindungsvorrichtung, insbesondere das Zwischenstück, so ausgestaltet ist, dass der Einstrom von Inertgas in das Arbeitsvolumen nur im verbundenen Zustand ermöglicht wird. Dies könnte beispielsweise so erfolgen, dass das Zwischenstück mit einer federbelasteten Absperrklappe ausgestattet ist, die im demontierten Zustand des Zwischenstücks den Gasweg durch die mit dem Zwischenstück verbundene Leitung sperrt. An dem mit dem Arbeitsvolumen verbundenen Gegenstück kann dann ein Dorn angebracht sein, der beim Herstellen der Verbindung zwischen Zwischenstück und Gegenstück die Absperrklappe nach innen drückt und somit den Gasweg freigibt. Hierdurch wird das Entweichen von Inertisierungsgas im nicht verbundenen Zustand vermieden und die Möglichkeit zum zweckfremden Einsatz der Inertisierungsvorrichtung weiter reduziert. Ferner wird hierdurch verhindert, dass durch das Rückströmen von Betriebsmedien in die zweite Verbindungsleitung sich in dieser ein Überdruck aufbaut, der bei dem Lösen der Verbindung zwischen Zwischenstück und Gegenstück schlagartig erniedrigt und zu unkontrollierten, peitschenartigen Bewegungen der zweiten Verbindungsleitung führt, die zu Verletzungen des Bedienungspersonals führen können.

Ein dritter Aspekt der erfindungsgemäßen Vorrichtung ist dadurch gekennzeichnet, dass die zweite Verbindungsleitung mechanisch flexibel, insbesondere biegbar ausgestaltet ist. Hierdurch wird das Herstellen der Verbindung zwischen Inertisierungsvorrichtung und Arbeitsvolumen bei unterschiedlichen lokalen Gegebenheiten und in unterschiedlichen Positionen erleichtert, da der Aufstellungsplatz für die Inertisierungsvorrichtung in Chemieanlagen oft sehr begrenzt ist. Die Materialeigenschaften und mechanischen Eigenschaften der mechanisch flexiblen, insbesondere biegbaren zweite Verbindungsleitung sind dabei bevorzugt so zu wählen, dass eine Kompatibilität mit dem Inertgas und dessen Druck und Temperatur gegeben ist. Um eine größtmögliche Bedienungssicherheit zu gewährleisten, sollte bevorzugt für den Fall einer unbeabsichtigten Rückströmung von Betriebsmedium aus dem Arbeitsvolumen in die zweite Verbindungsleitung auch eine Stabilität derselben gegen die Art sowie - innerhalb sinnvoller Grenzen - gegen Druck und Temperatur des Betriebsmediums gegeben sein.

Ein vierter Aspekt der erfindungsgemäßen Vorrichtung ist dadurch gekennzeichnet, dass die zweite Verbindungsleitung als Polymerschlauch, metallgewebeverstärkter Polymerschlauch oder als Metallschlauch ausgestaltet ist. Diese Materialien sind leicht im Handel erhältlich. Metallgewebeverstärkte Polymerschläuche oder als Metallschläuche sind zudem mit höherem Druck belastbar als reine Polymerschläuche oder solche mit Textilgewebe-, Mineralfaser- oder Polymergewebeverstärkung.

Ein fünfter Aspekt der erfindungsgemäßen Vorrichtung ist dadurch gekennzeichnet, dass Zwischenstück und Gegenstück in mechanisch komplementärer Weise ineinandergreifen und somit im verbundenen Zustand die vierte Verbindungsvorrichtung bilden, wobei Zwischenstück und Gegenstück eine Formgebung aufweisen, die aus der nachfolgenden Gruppe ausgewählt ist:
Schlüssel und Schloss, Bajonettverschluss, Außen- und Innengewinde als Linksgewinde, wobei Zwischenstück und Gegenstück so ausgestaltet ist, dass sie durch Zusammenführen und Drehen gasdicht verbindbar sind. Hierdurch wird die Möglichkeit zum zweckfremden Einsatz der Inertisierungsvorrichtung weiter reduziert.

Ein sechster Aspekt der erfindungsgemäßen Vorrichtung ist dadurch gekennzeichnet, dass die Rückflusssperrvorrichtung als Rückschlagarmatur ausgestaltet ist. Rückschlagarmaturen hält der Handel in vielen Ausgestaltungen bereit, so dass eine für die Verwendung in der erfindungsgemäßen Vorrichtung geeignete Rückschlagarmatur leicht gefunden werden kann. Beispiele sind Rückschlagklappen oder Rückschlagventile.

Ein siebter Aspekt der erfindungsgemäßen Vorrichtung ist dadurch gekennzeichnet, dass die Rückflusssperrvorrichtung so ausgestaltet ist, dass sie der Gasatmosphäre in dem Arbeitsvolumen bei dessen Maximaldruck und Maximaltemperatur während einer zuvor festgelegten Höchstdauer standhält. Auf diese Weise wird eine Beschädigung oder Zerstörung der Inertisierungsvorrichtung und das Austreten von Betriebsmedien in die Umgebung verhindert, falls unbeabsichtigter Weise bei der Inbetriebnahme des Arbeitsvolumens dieses noch mit der Inertisierungsvorrichtung verbunden ist, weil beispielsweise ihre Abtrennung vergessen wurde. Die zuvor festgelegten Höchstdauer sollte sich an den praktischen Gegebenheiten des Arbeitsvolumens orientieren. Der Fachmann kann sie durch entsprechende Routineversuche ermitteln.

Ein achter Aspekt der erfindungsgemäßen Vorrichtung ist dadurch gekennzeichnet, dass die zweite Verbindungsleitung und/oder die vierte Verbindungsvorrichtung eine Überdrucksicherung mit einer Ableitung umfasst, wobei die Ableitung geeignet ist zum gasdichten Verbinden der Überdrucksicherung mit der Abgasentsorgungsvorrichtung. Sobald die Überdrucksicherung bei Überdruck anspricht, wird der entsprechende Gasweg in die Abgasentsorgungsvorrichtung, beispielsweise ein Fackelsystem, freigegeben, so dass beispielsweise unbeabsichtigt in die Inertisierungsvorrichtung eindringende Betriebsmedien aus dem Arbeitsvolumen sicher abgeleitet und entsorgt werden können. Hierdurch wird der weitere Aufbau eines Überdrucks in der zweiten Verbindungsleitung verhindert, der ansonsten zu deren Bersten führen könnte.

Ein neunter Aspekt der erfindungsgemäßen Vorrichtung ist dadurch gekennzeichnet, dass die Überdrucksicherung mindestens ein Element umfasst, das aus der folgenden Gruppe ausgewählt wird: Berstscheibe, mechanisches Überdruckventil; pneumatisch oder elektromagnetisch betätigtes Ventil, gesteuert durch einen Drucksensor, der in Abhängigkeit des gemessenen Druckwertes ein elektronisches Steuersignal an das Ventil leitet. Geeignete Überdrucksicherungen hält der Handel in vielen Ausgestaltungen bereit, so dass eine für die Verwendung in der erfindungsgemäßen Vorrichtung geeignete Rückschlagarmatur leicht gefunden werden kann. Bevorzugt ist der Drucksensor mit einer lokalen Druckanzeige ausgestattet, so dass das Bedienpersonal vor dem Lösen der Verbindung zwischen zweiter Verbindungsleitung und Arbeitsvolumen erkennen kann, ob die zweite Verbindungsleitung unter Überdruck steht. Weiterhin ist es bevorzugt, wenn der mittels des Drucksensors gemessene Druckwert einen Alarm im Prozessleitsystem aktiviert, falls der gemessene Druckwert höher ist als der Druck des Inertgases im Inertgasverteilungssystem und die zweite Verbindungsleitung noch mit dem Arbeitsvolumen verbunden ist. Dieser Alarm kann bevorzugt dazu verwendet werden, die Inbetriebnahme des Arbeitsvolumens zu unterbinden, solange beide Alarmkriterien erfüllt sind.

Ein zehnter Aspekt der erfindungsgemäßen Vorrichtung ist dadurch gekennzeichnet, dass die erste Verbindungsleitung und/oder die erste Verbindungsvorrichtung eine Rückflusssperrvorrichtung umfasst. Auch diese Rückflusssperrvorrichtung kann als Rückschlagarmatur ausgestaltet werden. Auf diese Weise kann ein unbeabsichtigtes Eindringen von Betriebsmedien aus dem Arbeitsvolumen in das Inertgasverteilungssystem zusätzlich verhindert werden.

Ein elfter Aspekt der erfindungsgemäßen Vorrichtung ist dadurch gekennzeichnet, dass die dritte Verbindungsleitung und/oder die dritte Verbindungsvorrichtung eine Überdrucksicherung umfasst. Auf diese Weise kann ein etwaiger Gas-Rückstrom aus dem Arbeitsvolumen sicher in die Abgasentsorgungsvorrichtung abgeleitet werden.

Ein besonderer Aspekt der Erfindung betrifft die Verwendung einer Inertisierungsvorrichtung nach Anspruch 1 bis 11 zum Inertisieren eines Arbeitsvolumens in einer chemischen Produktionsanlage, wobei die chemische Produktionsanlage ausgewählt wird aus der Gruppe: Raffinerieanlage, petrochemische Anlage, Synthesegaserzeugungsanlage, Luftzerlegungsanlage. In den genannten Produktionsanlagen treten zahlreiche Arbeitsvolumina auf, die brennbare, brandfördernde, explosive, toxische Betriebsmedien enthalten.

Ein weiterer besonderer Aspekt der Erfindung betrifft die Verwendung einer Inertisierungsvorrichtung nach Anspruch 1 bis 11 zum Inertisieren eines Arbeitsvolumens in einer chemischen Produktionsanlage, wobei das Arbeitsvolumen ausgewählt wird aus der Gruppe: Behälter, Tanks, Reaktoren, Rohrleitungen, Verdichter, einzelne Verdichterstufen, Pumpen, Destillationskolonnen, Absorptionskolonnen. Bei Betriebsumstellungen sowie der Inbetriebnahme und Außerbetriebnahme chemischen Produktionsanlagen ergibt sich oft die Aufgabe, die genannten Arbeitsvolumina zu inertisieren und somit in einen sicheren Zustand zu überführen.

Ein weiterer besonderer Aspekt der Erfindung betrifft die Verwendung einer Inertisierungsvorrichtung nach Anspruch 1 bis 11 zum Inertisieren eines Arbeitsvolumens in einer chemischen Produktionsanlage, wobei mindestens ein Inertgas verwendet wird, das ausgewählt wird aus der Gruppe: Stickstoff, Argon, Kohlendioxid, an Sauerstoff abgereicherte Luft, Gemische mindestens zweier der vorgenannten Gase. Insbesondere Stickstoff wird wegen seiner hohen Verfügbarkeit und niedrigen Reaktivität häufig als Inertgas bevorzugt.

### Ausführungsbeispiel

Weiterbildungen, Vorteile und Anwendungsmöglichkeiten der Erfindung ergeben sich auch aus der nachfolgenden Beschreibung eines Ausführungsbeispielen und der Zeichnung. Dabei bilden alle beschriebenen und/oder bildlich dargestellten Merkmale für sich oder in beliebiger Kombination die Erfindung, unabhängig von ihrer Zusammenfassung in den Ansprüchen oder deren Rückbeziehung.

Es zeigt die einzige Figur:

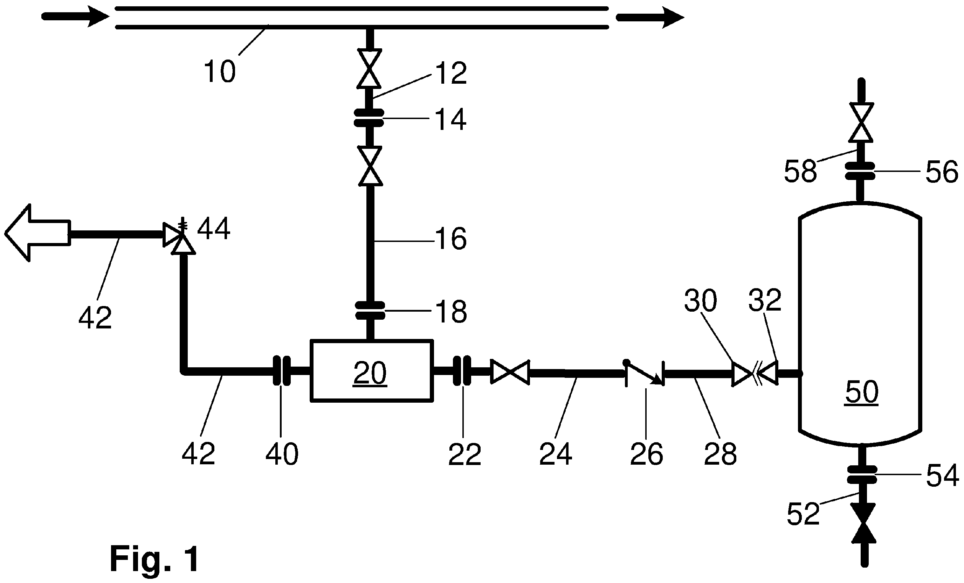

- Fig. 1: ein Ausführungsbeispiel einer Inertisierungsvorrichtung gemäß der Erfindung.

Gemäß des in Fig. 1 gezeigten Ausführungsbeispiels einer Inertisierungsvorrichtung gemäß der Erfindung wird in einer chemischen Produktionsanlage über eine Leitung 10, die einen Teil des anlagenweites Inertgasverteilungssystems darstellt, Stickstoff als Inertisierungsgas bereitgestellt. Leitung 10 ist mit einer Inertgas-Abnahmestelle verbunden, die eine Leitung 12 und ein im Leitungsweg 12 angeordnetes Ventil umfasst. Über eine erste Verbindungsvorrichtung 14, eine erste Verbindungsleitung 16, ein im Leitungsweg 16 angeordnetes Ventil und eine Verbindungsvorrichtung 18 wird ein Gasverteiler 20 mit der Inertgas-Abnahmestelle des Inertgasverteilungssystems gasdicht verbunden.

Der Gasverteiler 20 bedarf keiner besonderen Ausgestaltung, es kann ein im Handel erhältliches oder leicht herstellbares Verbindungsstück, beispielsweise ein Rohrverbindungs-T-Stück oder -Kreuzstück verwendet werden. Im letztgenannten Fall steht ein zusätzlicher Gasweg zur Verfügung. Eine Ausgestaltung des Gasverteilers als Behälter mit den entsprechenden Anschlussvorrichtungen für Verbindungsleitungen weist dagegen den Vorteil auf, dass aufgrund des höheren Eigenvolumens gegenüber reinen Rohrverbindungen Druckschwankungen oder Druckstöße in den Verbindungsleitungen stärker gedämpft werden.

Über die zweite Verbindungsvorrichtung 22, die zweite Verbindungsleitung 24 und ein im Leitungsweg 24 angeordnetes Ventil ist der Gasverteiler 20 mit einer Rückflusssperrvorrichtung 26 verbunden, die im vorliegenden Beispiel als Rückschlagklappe ausgestaltet ist und nur den Gasweg von dem Gasverteiler weg freigibt, dagegen den Gasweg in Richtung zum Gasverteiler sperrt.

Die Rückflusssperrvorrichtung ist über eine weitere Leitung 28 mit einem Zwischenstück 30 verbunden, das form- und kraftschlüssig mit einem Gegenstück 32 verbunden ist. Dies ist in Fig. 1 dadurch angedeutet, dass Zwischenstück und Gegenstück hinsichtlich des verwendeten Verfahrenssymbols jeweils als Teil eines Ventils dargestellt werden, wobei beide aufgrund ihrer Formgebung zusammenpassen, wie es durch das Symbol « angedeutet wird. Beispielsweise können Zwischenstück und Gegenstück als entsprechende Teile eines Bajonettverschlusses ausgestaltet werden, die demnach in mechanisch komplementärer Weise ineinandergreifen und durch Zusammenführen und Verdrehen in reversibel lösbarer Weise verbindbar sind. Zwischenstück und Gegenstück bilden dann eine vierte Verbindungsvorrichtung.

Das Gegenstück 32 ist gasdicht mit einem Arbeitsvolumen, im vorliegenden Fall einem zu inertisierenden Behälter 50, verbunden. Der Behälter 50 ist über Verbindungsvorrichtung 54, Leitung 52 und ein im Leitungsweg 52 angeordnetes Ventil mit einer Zuleitung und über Verbindungsvorrichtung 56, Leitung 58 und ein im Leitungsweg 58 angeordnetes Ventil mit einer Ableitung für ein Betriebsmedium verbunden. Während des Inertisierungsbetriebs strömt Stickstoff als Inertisierungsgas über die vierte Verbindungsvorrichtung in den Behälter 50. Das resultierende Spülgas wird über Leitung 58 aus dem Behälter 50 ausgeleitet und einer nicht dargestellten Abgasentsorgungsvorrichtung zugeführt. Der Leitungsweg 52 wird während der Inertisierung durch Schließen des entsprechenden Ventils geschlossen (angedeutet durch das schwarz ausgefüllte Ventilsymbol).

Der Gasverteiler 20 ist weiterhin über eine dritte Verbindungsvorrichtung 40, eine dritte Verbindungsleitung 42 und ein im Leitungsweg 42 angeordnetes, federbelastetes Sicherheitsventil 44 mit einer nicht dargestellten Abgasentsorgungsvorrichtung gasdicht verbunden. Falls vor der Wiederinbetriebnahme des Arbeitsvolumens nach erfolgter Inertisierung vergessen wird, die Verbindung zwischen Gasverteiler und Arbeitsvolumen durch Lösen der Verbindung zwischen Zwischenstück und Gegenstück zu trennen, ist es möglich, dass Betriebsmedien in die Inertisierungsvorrichtung einströmen können, falls die Rückflusssperrvorrichtung in Rückstromrichtung nur unzureichend sperrt, etwa weil sie durch heißes Betriebsmedium undicht wurde und somit ihre Aufgabe nur noch unzureichend erfüllt. In diesem Fall wird durch geeignete Einstellung des Sicherheitsventils 44 der Gasweg über die dritte Verbindungsleitung 42 in die Abgasentsorgungsvorrichtung geöffnet und damit das in die Inertisierungsvorrichtung eintretende Betriebsmedium sicher entsorgt. In diesem Fall ist es vorteilhaft, auch den Gasweg über die erste Verbindungsleitung durch eine in dieser zusätzlich angebrachten, nicht bildlich gezeigten Rückflusssperrvorrichtung zu sperren, um eine Rückströmung des Betriebsmediums in die Leitung 10 und somit eine Kontamination des Inertisierungsgases zu verhindern.

Nachfolgend werden weitere vorteilhafte, in Fig. 1 nicht bildlich gezeigte Ausgestaltungen der erfindungsgemäßen Inertisierungsvorrichtung erläutert. Sie sind mit dem oben erörterten Ausführungsbeispiel gemäß Figur 1 sowie untereinander kombinierbar, sofern der Fachmann nicht bestimmte Kombinationen als nicht sinnvoll oder nicht möglich ausschließt.

Eine weitere vorteilhafte, in Fig. 1 nicht bildlich gezeigte Ausgestaltung der erfindungsgemäßen Inertisierungsvorrichtung sieht vor, dass die vierte Verbindungsvorrichtung, insbesondere das Zwischenstück, so ausgestaltet ist, dass der Einstrom von Inertgas in das Arbeitsvolumen nur im verbundenen Zustand ermöglicht wird. Dies könnte beispielsweise so erfolgen, dass das Zwischenstück mit einer federbelasteten Absperrklappe ausgestattet ist, die im demontierten Zustand des Zwischenstücks den Gasweg durch die mit dem Zwischenstück verbundene Leitung sperrt. An dem mit dem Arbeitsvolumen verbundenen Gegenstück könnte dann ein Dorn angebracht sein, der beim Herstellen der Verbindung zwischen Zwischenstück und Gegenstück die Absperrklappe nach innen drückt und somit den Gasweg freigibt. Hierdurch wird das Entweichen von Inertisierungsgas im nicht verbundenen Zustand vermieden und die Möglichkeit zum zweckfremden Einsatz der Inertisierungsvorrichtung weiter reduziert.

Eine weitere vorteilhafte, in Fig. 1 nicht bildlich gezeigte Ausgestaltung der erfindungsgemäßen Inertisierungsvorrichtung sieht vor, dass die zweite Verbindungsleitung mechanisch flexibel, insbesondere biegbar ausgestaltet ist. Hierdurch wird das Herstellen der Verbindung zwischen Inertisierungsvorrichtung und Arbeitsvolumen bei unterschiedlichen lokalen Gegebenheiten und in unterschiedlichen Positionen erleichtert, da der Aufstellungsplatz für die Inertisierungsvorrichtung in Chemieanlagen oft sehr begrenzt ist.

Eine weitere vorteilhafte, in Fig. 1 nicht bildlich gezeigte Ausgestaltung der erfindungsgemäßen Inertisierungsvorrichtung sieht vor, dass die zweite Verbindungsleitung als Polymerschlauch, metallgewebeverstärkter Polymerschlauch oder als Metallschlauch ausgestaltet ist. Diese Materialien sind leicht im Handel erhältlich. Metallgewebeverstärkte Polymerschläuche oder als Metallschläuche sind zudem mit höherem Druck belastbar als reine Polymerschläuche oder solche mit Textilgewebe-, Mineralfaser- oder Polymergewebeverstärkung.

Eine weitere vorteilhafte, in Fig. 1 nicht bildlich gezeigte Ausgestaltung der erfindungsgemäßen Inertisierungsvorrichtung sieht vor, dass das Zwischenstück und Gegenstück eine Formgebung aufweisen, die aus der nachfolgenden Gruppe ausgewählt ist:
Schlüssel und Schloss, Bajonettverschluss, Außen- und Innengewinde als Linksgewinde, wobei Zwischenstück und Gegenstück so ausgestaltet ist, dass sie durch Zusammenführen und Drehen gasdicht verbindbar sind und wobei das Zwischenstück eine Schließvorrichtung für den Inertgas-Einstrom umfasst, die beim Drehen geöffnet wird und somit den Inertgas-Gasweg freigibt. Hierdurch wird das Entweichen von Inertisierungsgas im nicht verbundenen Zustand vermieden und die Möglichkeit zum zweckfremden Einsatz der Inertisierungsvorrichtung weiter reduziert.

Eine weitere vorteilhafte, in Fig. 1 nicht bildlich gezeigte Ausgestaltung der erfindungsgemäßen Inertisierungsvorrichtung sieht vor, dass die Rückflusssperrvorrichtung als Rückschlagarmatur ausgestaltet ist. Rückschlagarmaturen hält der Handel in vielen Ausgestaltungen bereit, so dass eine für die Verwendung in der erfindungsgemäßen Vorrichtung geeignete Rückschlagarmatur leicht gefunden werden kann. Beispiele sind Rückschlagklappen oder Rückschlagventile.

Eine weitere vorteilhafte, in Fig. 1 nicht bildlich gezeigte Ausgestaltung der erfindungsgemäßen Inertisierungsvorrichtung sieht vor, dass die Rückflusssperrvorrichtung und/oder die Schließvorrichtung so ausgestaltet sind, dass sie der Gasatmosphäre in dem Arbeitsvolumen bei dessen Maximaldruck und Maximaltemperatur während einer zuvor festgelegten Höchstdauer standhalten. Auf diese Weise wird eine Beschädigung oder Zerstörung der Inertisierungsvorrichtung und das Austreten von Betriebsmedien in die Umgebung verhindert, falls unbeabsichtigter Weise bei der Inbetriebnahme des Arbeitsvolumens dieses noch mit der Inertisierungsvorrichtung verbunden ist, weil beispielsweise ihre Abtrennung vergessen wurde. Die zuvor festgelegten Höchstdauer sollte sich an den praktischen Gegebenheiten des Arbeitsvolumens orientieren. Der Fachmann kann sie durch entsprechende Routineversuche ermitteln.

Eine weitere vorteilhafte, in Fig. 1 nicht bildlich gezeigte Ausgestaltung der erfindungsgemäßen Inertisierungsvorrichtung sieht vor, dass die zweite Verbindungsleitung und/oder die vierte Verbindungsvorrichtung eine Überdrucksicherung mit einer Ableitung umfasst, wobei die Ableitung geeignet ist zum gasdichten Verbinden der Überdrucksicherung mit der Abgasentsorgungsvorrichtung. Sobald die Überdrucksicherung bei Überdruck anspricht, wird der entsprechende Gasweg in die Abgasentsorgungsvorrichtung, beispielsweise ein Fackelsystem, freigegeben, so dass beispielsweise unbeabsichtigt in die Inertisierungsvorrichtung eindringende Betriebsmedien aus dem Arbeitsvolumen sicher abgeleitet und entsorgt werden können. Hierdurch wird der weitere Aufbau eines Überdrucks in der zweiten Verbindungsleitung verhindert, der ansonsten zu deren Bersten führen könnte.

Eine weitere vorteilhafte, in Fig. 1 nicht bildlich gezeigte Ausgestaltung der erfindungsgemäßen Inertisierungsvorrichtung sieht vor, dass die Überdrucksicherung mindestens ein Element umfasst, das aus der folgenden Gruppe ausgewählt wird: Berstscheibe, mechanisches Überdruckventil; pneumatisch oder elektromagnetisch betätigtes Ventil, gesteuert durch einen Drucksensor, der in Abhängigkeit des gemessenen Druckwertes ein elektronisches Steuersignal an das Ventil leitet. Geeignete Überdrucksicherungen hält der Handel in vielen Ausgestaltungen bereit, so dass eine für die Verwendung in der erfindungsgemäßen Vorrichtung geeignete Rückschlagarmatur leicht gefunden werden kann.

Eine weitere vorteilhafte, in Fig. 1 nicht bildlich gezeigte Ausgestaltung der erfindungsgemäßen Inertisierungsvorrichtung sieht vor, dass die erste Verbindungsleitung und/oder die erste Verbindungsvorrichtung eine Rückflusssperrvorrichtung umfasst. Auch diese Rückflusssperrvorrichtung kann als Rückschlagarmatur ausgestaltet werden. Auf diese Weise kann ein unbeabsichtigtes Eindringen von Betriebsmedien aus dem Arbeitsvolumen in das Inertgasverteilungssystem zusätzlich verhindert werden.

### Bezugszeichenliste

- [10]: Leitung
- [12]: Leitung mit Ventil
- [14]: Verbindungsvorrichtung (erste Verbindungsvorrichtung)
- [16]: Leitung (erste Verbindungsleitung) mit Ventil
- [18]: Verbindungsvorrichtung
- [20]: Gasverteiler
- [22]: Verbindungsvorrichtung (zweite Verbindungsvorrichtung)
- [24]: Leitung (zweite Verbindungsleitung) mit Ventil
- [26]: Rückflusssperrvorrichtung
- [28]: Leitung
- [30]: Zwischenstück
- [32]: Gegenstück
- [40]: Verbindungsvorrichtung (dritte Verbindungsvorrichtung)
- [42]: Leitung (dritte Verbindungsleitung)
- [44]: Sicherheitsventil
- [50]: Behälter (Arbeitsvolumen)
- [52]: Leitung mit Ventil
- [54]: Verbindungsvorrichtung
- [56]: Verbindungsvorrichtung
- [58]: Leitung mit Ventil

## Patentansprüche

1. Inertisierungsvorrichtung zum Inertisieren eines Arbeitsvolumens in einer chemischen Produktionsanlage durch Spülen mit Inertgas, wobei die chemische Produktionsanlage ein anlagenweites Inertgasverteilungssystem mit Rohrleitungen für die Verteilung des Inertgases und mindestens eine mit einer Verbindungsleitung verbindbare Inertgas-Abnahmestelle umfasst,
wobei die Inertisierungsvorrichtung folgende, miteinander in Fluidverbindung stehende Bestandteile und Baugruppen umfasst:
(a) einen Gasverteiler und eine erste Verbindungsleitung mit einer ersten Verbindungsvorrichtung, geeignet zum Herstellen einer gasdichten Verbindung zwischen einer Abnahmestelle des anlagenweiten Inertgasverteilungssystems und dem Gasverteiler,
(b) eine zweite Verbindungsleitung mit einer zweiten Verbindungsvorrichtung, geeignet zum Verbinden des Gasverteilers mit dem zu inertisierenden Arbeitsvolumen,
(c) eine dritte Verbindungsleitung mit einer dritten Verbindungsvorrichtung, geeignet zum Verbinden des Gasverteilers mit einer Abgasentsorgungsvorrichtung,
**dadurch gekennzeichnet, dass**
die zweite Verbindungsleitung an ihrem zu dem Arbeitsvolumen weisenden Ende mit einem Zwischenstück verbunden ist, bevorzugt in nicht reversibel lösbarer Weise mit einem Zwischenstück verbunden ist, wobei das Zwischenstück mit einem an dem Arbeitsvolumen vorgesehenen Gegenstück in reversibel lösbarer Weise verbindbar ist, wobei Zwischenstück und Gegenstück im verbundenen Zustand eine vierte Verbindungsvorrichtung bilden, die den Einstrom von Inertgas in das Arbeitsvolumen ermöglicht, und wobei die zweite Verbindungsleitung und/oder die vierte Verbindungsvorrichtung eine Rückflusssperrvorrichtung umfasst.

2. Inertisierungsvorrichtung nach Anspruch 1, **dadurch gekennzeichnet, dass** die vierte Verbindungsvorrichtung so ausgestaltet ist, dass der Einstrom von Inertgas in das Arbeitsvolumen nur im verbundenen Zustand ermöglicht wird.

3. Inertisierungsvorrichtung nach Anspruch 1 oder 2, **dadurch gekennzeichnet, dass** die zweite Verbindungsleitung mechanisch flexibel, insbesondere biegbar ausgestaltet ist.

4. Inertisierungsvorrichtung nach Anspruch 3, **dadurch gekennzeichnet, dass** die zweite Verbindungsleitung als Polymerschlauch, metallgewebeverstärkter Polymerschlauch oder als Metallschlauch ausgestaltet ist.

5. Inertisierungsvorrichtung nach einem der vorigen Ansprüche, **dadurch gekennzeichnet, dass** Zwischenstück und Gegenstück in mechanisch komplementärer Weise ineinandergreifen und somit im verbundenen Zustand die vierte Verbindungsvorrichtung bilden, wobei Zwischenstück und Gegenstück eine Formgebung aufweisen, die aus der nachfolgenden Gruppe ausgewählt ist:
Schlüssel und Schloss, Bajonettverschluss, Außen- und Innengewinde als Linksgewinde, wobei Zwischenstück und Gegenstück so ausgestaltet ist, dass sie durch Zusammenführen und Drehen gasdicht verbindbar sind.

6. Inertisierungsvorrichtung nach einem der vorigen Ansprüche, **dadurch gekennzeichnet, dass** die Rückflusssperrvorrichtung als Rückschlagarmatur ausgestaltet ist.

7. Inertisierungsvorrichtung nach einem der vorigen Ansprüche, **dadurch gekennzeichnet, dass** die Rückflusssperrvorrichtung so ausgestaltet ist, dass sie der Gasatmosphäre in dem Arbeitsvolumen bei dessen Maximaldruck und Maximaltemperatur während einer zuvor festgelegten Höchstdauer standhält.

8. Inertisierungsvorrichtung nach einem der vorigen Ansprüche, **dadurch gekennzeichnet, dass** die zweite Verbindungsleitung und/oder die vierte Verbindungsvorrichtung eine Überdrucksicherung mit einer Ableitung umfasst, wobei die Ableitung geeignet ist zum gasdichten Verbinden der Überdrucksicherung mit der Abgasentsorgungsvorrichtung.

9. Inertisierungsvorrichtung nach Anspruch 8, **dadurch gekennzeichnet, dass** die Überdrucksicherung mindestens ein Element umfasst, das aus der folgenden Gruppe ausgewählt wird: Berstscheibe, mechanisches Überdruckventil; pneumatisch oder elektromagnetisch betätigtes Ventil, gesteuert durch einen Drucksensor, der in Abhängigkeit des gemessenen Druckwertes ein elektronisches Steuersignal an das Ventil leitet.

10. Inertisierungsvorrichtung nach einem der vorigen Ansprüche, **dadurch gekennzeichnet, dass** die erste Verbindungsleitung und/oder die erste Verbindungsvorrichtung eine Rückflusssperrvorrichtung umfasst.

11. Inertisierungsvorrichtung nach einem der vorigen Ansprüche, **dadurch gekennzeichnet, dass** die dritte Verbindungsleitung und/oder die dritte Verbindungsvorrichtung eine Überdrucksicherung umfasst.

12. Verwendung einer Inertisierungsvorrichtung nach Anspruch 1 bis 11 zum Inertisieren eines Arbeitsvolumens in einer chemischen Produktionsanlage, wobei die chemische Produktionsanlage ausgewählt wird aus der Gruppe: Raffinerieanlage, petrochemische Anlage, Synthesegaserzeugungsanlage, Luftzerlegungsanlage.

13. Verwendung einer Inertisierungsvorrichtung nach Anspruch 1 bis 11 zum Inertisieren eines Arbeitsvolumens in einer chemischen Produktionsanlage, wobei das Arbeitsvolumen ausgewählt wird aus der Gruppe: Behälter, Tanks, Reaktoren, Rohrleitungen, Verdichter, einzelne Verdichterstufen, Pumpen, Destillationskolonnen, Absorptionskolonnen.

14. Verwendung einer Inertisierungsvorrichtung nach Anspruch 1 bis 11 zum Inertisieren eines Arbeitsvolumens in einer chemischen Produktionsanlage, wobei mindestens ein Inertgas verwendet wird, das ausgewählt wird aus der Gruppe: Stickstoff, Argon, Kohlendioxid, an Sauerstoff abgereicherte Luft, Gemische mindestens zweier der vorgenannten Gase.
